# EUROPÄISCHE PATENTSCHRIFT

(11) **EP 1 202 877 B1**
(45) Veröffentlichungstag und Bekanntmachung des Hinweises auf die Patenterteilung: **02.01.2003**
(21) Anmeldenummer: 00965755.2
(22) Anmeldetag: 16.08.2000
(51) Int. Cl.: B60R 21/01

(54) **VORRICHTUNG ZUM AUSLÖSEN EINER IN EINEM LENKRAD AUFGENOMMENEN AIRBAGEINRICHTUNG**
DEVICE FOR TRIGGERING AN AIRBAG DEVICE STORED IN A STEERING WHEEL
DISPOSITIF POUR DECLENCHER UN DISPOSITIF D'AIRBAG LOGE DANS UN VOLANT

(30) Priorität: 20.08.1999 DE 19939502
(43) Veröffentlichungstag der Anmeldung: 08.05.2002
(73) Patentinhaber: SIEMENS AKTIENGESELLSCHAFT, 80333 München (DE)
(72) Erfinder: DIRMEYER, Josef, 92439 Bodenwöhr (DE); SCHMIDT, Claus, 93053 Regensburg (DE)
(86) Internationale Anmeldenummer: DE0002777
(87) Internationale Veröffentlichungsnummer: WO01014170

(56) Entgegenhaltungen:
- EP-A- 0 641 689
- EP-A- 0 776 794
- DE-C- 19 633 409
- US-A- 5 660 413

## Beschreibung

Die Erfindung betrifft eine Vorrichtung zum Auslösen einer in einem Lenkrad aufgenommenen Airbageinrichtung gemäß dem Oberbegriff des Hauptanspruchs.

Eine gattungsgemäße Vorrichtung ist aus der Deutschen Patentanmeldung DE 19633409 bekannt. Der Lichtwellenleiter, beispielsweise eine Glasfaser, ist optisch mit der Zündpille derart gekoppelt, daß die Zündpille durch Lichtimpulse ausreichenden Energieinhalts unmittelbar gezündet wird, wohingegen Lichtimpulse kleinen Energieinhalts als Prüfimpulse dienen, die mittels geeigneter Mittel reflektiert werden und zur Überprüfung des Lichtwellenleiters herangezogen werden können. Über die Anbindung des Lichtwellenleiters an die Zündpille finden sich in der genannten Patentanmeldung keine Einzelheiten. Diese Anbindung wird im allgemeinen starr ausgeführt, was bei einer in einem Lenkrad aufgenommenen Airbageinrichtung, die sich mit dem Lenkrad mitdreht, zu erhöhtem Bauaufwand führt, da solche Lichtwellenleiter in sich nur wenig verdrehbar bzw. tordierbar sind.

Der Erfindung liegt die Aufgabe zugrunde, eine gattungsgemäße Vorrichtung derart auszubilden, daß sie bei hoher Funktionszuverlässigkeit einen einfachen Aufbau aufweist.

Mit der Vorrichtung gemäß dem Anspruch 1 wird eine Lösung dieser Aufgabe geschaffen.

Erfindungsgemäß ist der Lichtwellenleiter, über den von einer Lichtquelle aus die Lichtimpulse zur Zündung der Zündpille eingeleitet werden, bezüglich der Drehung des Lenkrades von diesem entkoppelt, so daß er nicht auf Torsion beansprucht wird. Die Kopplungseinrichtung, über die die drehmäßige Entkopplung aber die funktionale Kopplung in dem Übertragungsweg von dem Lichtwellenleiter über die Zündpille zum Gasgenerator und von dort zum Airbag erfolgt, ist konzentrisch bzw. gleichachsig zur Drehachse des Lenkrades angeordnet, so daß die Funktion unabhängig von der Drehstellung des Lenkrades gewährleistet ist.

Die Unteransprüche sind auf vorteilhafte Ausführungsformen und Weiterbildungen der erfindungsgemäßen Vorrichtung gerichtet.

Die Erfindung wird im folgenden anhand schematischer Zeichnungen beispielsweise und mit weiteren Einzelheiten erläutert.

Es stellen dar:
Fig. 1 eine erste Ausführungsform einer lenkradfesten Airbageinrichtung, die über einen Lichtimpuls ausgelöst wird, in einer Schnittansicht,
Fig. 2 eine Detailschnittansicht einer weiteren Ausführungsform der Vorrichtung,
Fig. 3 eine Detailschnittansicht einer abgeänderten Ausführungsform der Vorrichtung und
Fig. 4 eine Detailschnittansicht zur Erläuterung der Durchführung eines Lichtwellenleiters in eine Lenkspindel.

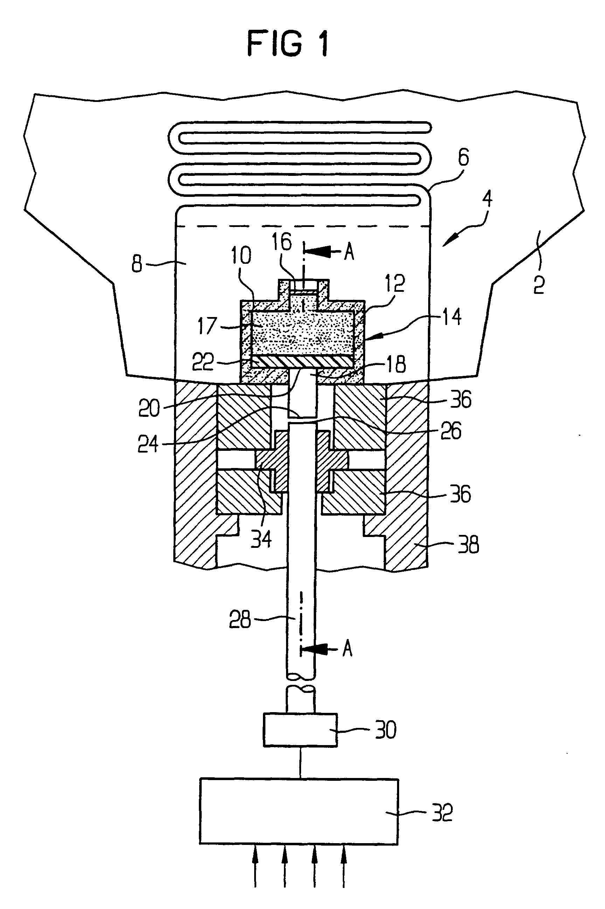

Gemäß Fig. 1 ist in einem ansatzweise dargestellten und mit 2 bezeichneten Lenkrad eine insgesamt mit 4 bezeichnete Airbageinrichtung aufgenommen.

Zu der Airbageinrichtung 4 gehört ein Airbag 6 (zusammengefaltet dargestellt), der an einem starr mit dem Lenkrad verbundenen Gasgenerator 8 angebracht ist. Der Gasgenerator 8 weist eine Ausnehmung 10 auf, die ein Gehäuse 12 einer insgesamt mit 14 bezeichneten Zündpille aufnimmt.

Das Gehäuse 14 ist zum Gasgenerator 8 hin mittels einer Scheibe 16 verschlossen. Im Inneren des Gehäuses 12 ist ein leicht entzündliches Zündpulver 17 aufgenommen.

Das Gehäuse 12 weist eine gemäß Fig. 1 nach unten gerichtete Durchgangsöffnung auf, in der ein Endteil 18 eines Lichtwellenleiters beispielsweise durch Kleben befestigt ist. Das Lichtaustrittsfenster 20 des Endteils 18 grenzt unmittelbar an das Zündpulver 17 oder an eine am Boden des Gehäuses 12 angeordnete Fluoreszenzfolie 22 an.

Dem Lichteintrittsfenster 24 des Endteils 18 gegenüber angeordnet ist das Lichtaustrittsfenster 26 eines Zuleitungsteils 28 des zweigeteilten Lichtwellenleiters, der mit einer beispielsweise als Laserdiode ausgebildeten Lichtquelle 30 verbunden ist, die über ein Steuergerät 32 angesteuert wird. Der freie Endbereich des Zuleitungsteils 28 ist in einem Gleitlager 34 gehalten, das zwischen zwei Fixierbuchsen 36 aufgenommen ist, die in ein drehfest mit dem Lenkrad 2 verbundenes Lenkrohr 38 eingesetzt sind.

Die gesamte Anordnung ist derart, daß das sich mit dem Lenkrad 2 mitdrehende Lichteintrittsfenster 24 des Endteils 18 konzentrisch zur Drehachse A-A des Lenkrades 2 bzw. des Lenkrohrs 38 ausgerichtet ist. Das sich in geringem Abstand vom Lichteintrittsfenster 24 diesem gegenüber befindliche Lichtaustrittsfenster 26 des Zuleitungsteils 28 ist ebenfalls konzentrisch zur Drehachse A-A ausgerichtet, so daß bei einer Drehung des Lenkrades 2 die Ausrichtung der beiden Fenster 24 und 26 zueinander erhalten bleibt, wobei der Zuleitungsteil 28 sich infolge seiner Lagerung innerhalb des Lenkrohrs 38 nicht mitdreht. Es versteht sich, daß vorteilhafterweise die gesamte Zündpille 14 mit dem Endteil 18 konzentrisch zur Drehachse A-A ausgerichtet sind. Die konzentrische Ausrichtung der Fenster 24 und 26 muß nicht völlig exakt sein; es genügt, wenn während der Drehung eine deutliche Überlappung erhalten bleibt.

Die Funktion der Airbageinrichtung sowie die Zündung der Zündpille 14 mittels eines von der Lichtquelle 30 abgegebenen Lichtimpulses und die Erzeugung von Gas zum Aufblasen des Airbags 6 in dem Gasgenerator 8 nach dessen Aktivierung durch Zündung der Zündpille und Sprengung der Scheibe 16 sind an sich bekannt und werden daher nicht erläutert. Die Anordnung der Fenster 24 und 26 in geringem gegenseitigen Abstand und koaxial zur Drehachse A-A stellt eine Kopplungseinrichtung dar, mit Hilfe derer der Zuleitungsteil 28 des Lichtwellenleiters bezüglich der Drehung vom Lenkrad 2 entkoppelt ist, die optische bzw. funktionale Kopplung zwischen dem Zuleitungsteil 28 und dem Endteil 18 bzw. der Zündpille 14 jedoch gewährleistet ist. Es versteht sich, daß der Spalt zwischen den beiden Fenstern 24 und 26 klein ist, so daß die Übertragung des Lichtimpulses von dem Zuleitungsteil 28 in den Endteil 18 ohne wesentliche optische Verluste geschieht. Die Funktion der Fluoreszenzfolie 22 besteht darin, daß bei bidirektionaler Nutzung des Lichtwellenleiters für Diagnosezwecke die Fluoreszenzfolie von schwachen Prüfuimpulsen angeregt wird und Licht in den Lichtwellenleiter zurückstrahlt.

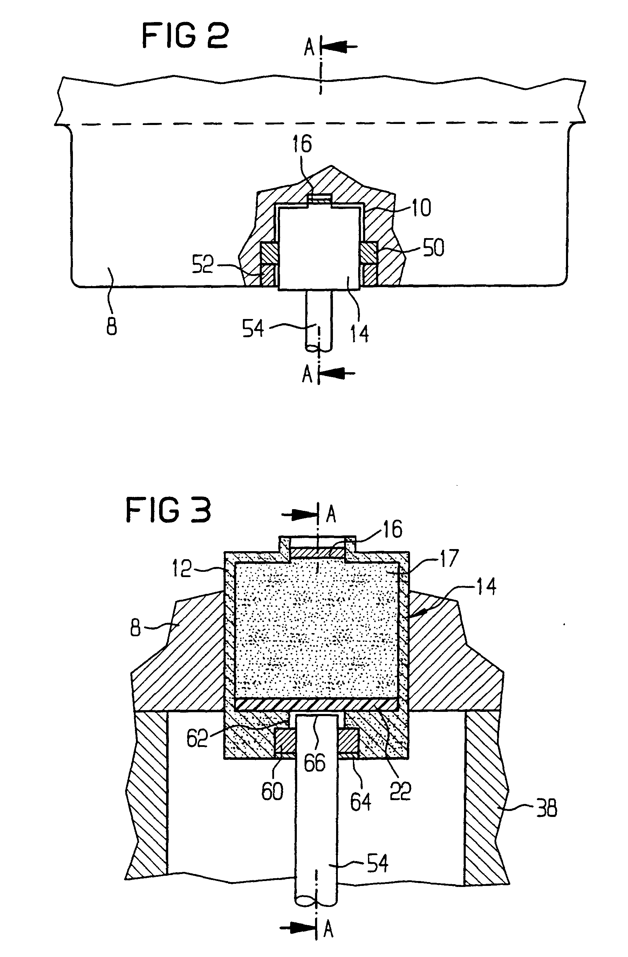

Fig. 2 zeigt eine abgeänderte Ausführungsform einer Kupplungseinrichtung, wobei für funktionsgleiche Bauteile die gleichen Bezugszeichen wie in Fig. 1 verwendet sind.

Im Unterschied zur Ausführungsform gemäß Fig. 1 ist bei der Ausführungsform gemäß Fig. 2 die Zündpille 14 konzentrisch zur Drehachse A-A des Lenkrades in dem Gasgenerator 8 mit Hilfe einer in die Ausnehmung 10 des Gasgenerators 8 eingesetzten Gleitbuchse 50 drehbar gelagert. Zur Sicherung der Gleitbuchse 50 ist eine Befestigungs- bzw. Schraubbuchse 52 in den Gasgenerator 8 eingeschraubt.

Da bei der Ausführungsform gemäß Fig. 2 die Zündpille 14 drehmäßig vom starr mit dem Lenkrad verbundenen Gasgenerator 8 entkoppelt ist, kann der Lichtwellenleiter 54 einteilig ausgebildet sein und mit der Zündpille 14 bzw. einem Gehäuse starr verbunden sein.

Beim Zünden der Zündpille 14 mit Hilfe eines vom Lichtwellenleiter 54 zugeführten Lichtimpulses wird infolge der Zündung des Zündpulvers freiwerdende Energie in den Gasgenerator 8 geleitet und löst dort das Entstehen von Gas aus, das den Airbag aufbläst. Die drehmäßige Entkopplung jedoch funktionale Kupplung zwischen dem Lichtwellenleiter 54 und dem Gasgenerator 8 bzw. dem Airbag wird bei der Ausführungsform gemäß Fig. 2 durch die Lagerung der Zündpille 14 in dem Gasgenerator 8 erreicht.

Fig. 3 zeigt eine gegenüber Fig. 1 in anderer Weise als in Fig. 2 abgeänderte Ausführungsform. Bei der Ausführungsform gemäß Fig. 3 ist die Zündpille 14 wiederum starr mit dem mit dem Lenkrad starr verbundenen Gasgenerator 8 verbunden. Das Ende des Lichtwellenleiters 54 ist in einer Gleitbuchse 60 aufgenommen, die in einem Durchgangsloch 62 der Bodenwand des Gehäuses 12 der Zündpille 14 eingesetzt ist. Zur Halterung der Gleitbuchse 60 ist eine Schraubbuchse 64 vorgesehen. Das Lichtaustrittsfenster 66 des Lichtwellenleiters 54 befindet sich unmittelbar unterhalb der Fluoreszenzfolie 22, die in den Bodenbereich der Zündpille 14 eingesetzt ist. Die drehmäßige Entkopplung zwischen der Drehung des Lenkrades bzw. des Lenkrads 38 und dem Lichtwellenleiter 54 findet durch dessen Lagerung in dem Durchgangsloch 62 statt. Die funktionale Kopplung ist durch die Anordnung des Lichtaustrittsfensters 66 unmittelbar unterhalb der Fluoreszenzfolie 22 gegeben. Es versteht sich, daß die Anordnung wiederum vorteilhafterweise derart ist, daß Konzentrität mit der Drehachse A-A vorliegt.

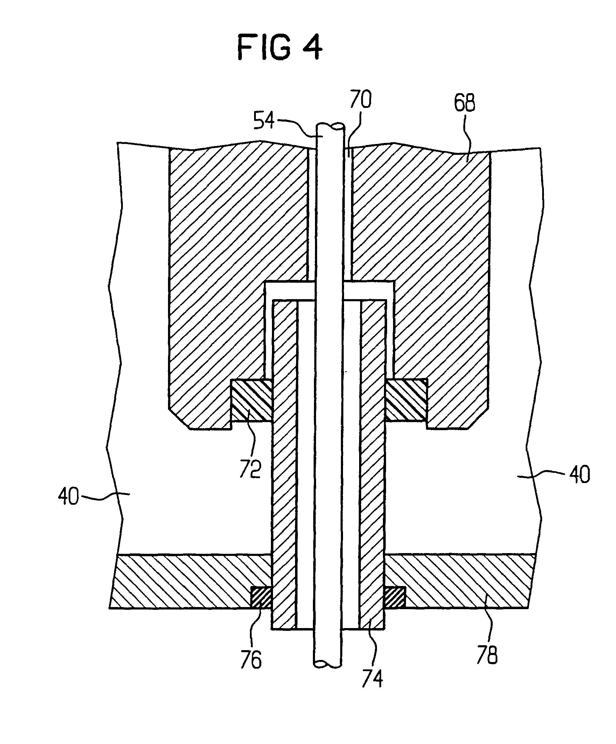

Fig. 4 zeigt ein Ausführungsbeispiel, wie der Lichtwellenleiter 54 in das Innere des Lenkrohrs 38 bzw. einer Lenkspindel 68, die am Ende des Lenkrohrs 38 angeordnet ist, eingebracht wird. Die Lenkspindel 68, die in einem an sich bekannten Lenkgetriebe arbeitet, dessen Innenraum mit Hydraulikfluid 40 oder Lenköl gefüllt ist, weist einen Durchgangskanal 70 auf. In eine stufenförmigen Aufweitung am Ende des Durchgangskanals 70 ist unter Zwischenanordnung eines Radialwellendichtrings 72 ein Überbrückungsrohr 74 eingesetzt, das mit Hilfe eines Dichtrings 76 abgedichtet durch eine Wand 78 des Lenkgetriebes hindurchgeführt ist. Auf diese Weise setzt sich der Durchgangskanal 70 der Lenkspindel 68 durch das Überbrükkungsrohr 74 hindurch, das mit Hilfe des Radialwellendichtrings 72 vom Lenkrad drehmäßig entkoppelt ist, nach außen hin fort, so daß de Lichtwellenleiter 54 eingeführt werden kann. Mit Hilfe der Dichtungen 72 und 76 wird erreicht, daß der Durchgangskanal 70 bzw. das Innere des Übergangsrohr 74 dicht vom Inneren des fluidgefüllten Lenkgetriebes getrennt sind.

Es versteht sich, daß die Erfindung in vielfältiger Weise eingesetzt und abgeändert werden kann. Beispielsweise muß die Lenkspindel 68 der Fig. 4 nicht unmittelbar mechanisch mit dem eigentlichen Lenkgetriebe bzw. einer Spurstange zusammenwirken. Die Lenkspindel 68 bzw. das Lenkrohr 38 (Fig. 1) kann auch der Lenkgeber einer Lenkung sein, bei der das die Spurstangen betätigende Lenkgetriebe über Hydraulikleitungen oder elektrische Leitungen gesteuert wird. Die drehmäßige Entkopplung zwischen Lenkrad und Lichtwellenleiter kann auch dadurch erfolgen, daß die gesamte Airbageinrichtung drehmäßig vom Lenkrad entkoppelt ist oder nur der Airbag drehfest am Lenkrad angebracht ist und sich relativ zum Gasgenerator 8 drehen kann. Die Fluoreszenzfolie 22 ist kein zwingender Bestandteil der Anordnung. Das Zündpulver oder das Zündmaterial kann unmittelbar durch den Lichtimpuls gezündet werden, der aus dem direkt angrenzenden Lichtaustrittsfenster des Lichtwellenleiters austritt.

## Patentansprüche

1. Vorrichtung zum Auslösen einer in einem Lenkrad aufgenommenen Airbageinrichtung, enthaltend einen Gasgenerator (8) zum Aufblasen eines Airbags (6), eine Zündpille (14) zum Zünden des Gasgenerators und einen mit einer lenkradfernen Lichtquelle (30) verbundenen Lichtwellenleiter (18, 28; 54) zum Zuführen eines die Zündpille zündenden Lichtimpulses zu der Zündpille, **dadurch gekennzeichnet, daß** zwischen dem Airbag (6) und dem Lichtleiter (18, 28, 54) eine zur Drehachse (A-A) des Lenkrades (2) zumindest etwa konzentrisch angeordnete Kopplungseinrichtung vorgesehen ist, die den Lichtleiter von einer Drehung des Lenkrades abkoppelt und eine Funktionsverbindung von dem Lichtleiter über die Zündpille (14) zum Gasgenerator (8) und zum Airbag gewährleistet.

2. Vorrichtung nach Anspruch 1, **dadurch gekennzeichnet, daß** der Lichtleiter einen lenkradfesten, an der Zündpille (14) endenden Endteil (18) und einen von der Lichtquelle (30) ausgehenden, von dem Lenkrad (2) bezüglich dessen Drehbarkeit abgekoppelten Zuleitungsteil (28) aufweist, wobei ein Lichtaustrittsfenster (26) des Zuleitungsteils und ein Lichteintrittsfenster (24) des Endteils sich gegenüberliegend gleichachsig mit der Drehachse (A-A) des Lenkrades (2) angeordnet sind.

3. Vorrichtung nach Anspruch 2, **dadurch gekennzeichnet, daß** das lenkradseitige Ende des Zuleitungsteils (28) des Lichtwellenleiters in einem Lager (34) aufgenommen ist, das an einem mit dem Lenkrad (2) drehfest verbundenen Lenkrohr (38) angebracht ist.

4. Vorrichtung nach Anspruch 1, **dadurch gekennzeichnet, daß** der Gasgenerator (8) drehfest mit dem Lenkrad (2) verbunden und relativ zur koaxial zur Drehachse (A-A) des Lenkrades (2) angebrachten und bezüglich der Drehung vom Lenkrad entkoppelten Zündpille (14) drehbar ist.

5. Vorrichtung nach Anspruch 4, **dadurch gekennzeichnet, daß** die Zündpille (14) in einer Ausnehmung (10) des Gasgenerators (8) aufgenommen ist und zwischen dem Gasgenerator und der Zündpille ein Lager (50) angeordnet ist.

6. Vorrichtung nach Anspruch 1, **dadurch gekennzeichnet, daß** die Zündpille (14) drehfest mit dem Lenkrad (2) verbunden ist und relativ zu dem ihr zugewandten Ende des Lichtwellenleiters (54) drehbar ist.

7. Vorrichtung nach Anspruch 6, **dadurch gekennzeichnet, daß** der Lichtwellenleiter (54) in einer Durchgangsöffnung (62) eines Gehäuses (12) der Zündpille (14) unter Zwischenanordnung eines Lagers (60) aufgenommen ist.

8. Vorrichtung nach einem der Ansprüche 1 bis 7, **dadurch gekennzeichnet, daß** zwischen einem Lichtaustrittsfenster (66) des Lichtwellenleiters (54) und der Zündpille (14) eine Fluoreszenzfolie (22) angeordnet ist.

9. Vorrichtung nach einem der Ansprüche 1 bis 8, **dadurch gekennzeichnet, daß** der Lichtwellenleiter (54) von einem Außenraum aus durch ein Übergangsteil (74) hindurch in das Innere eines mit dem Lenkrad (2) drehfest verbundenen Bauteils (68) geführt ist, wobei das Überbrückungsbauteil starr mit einer Wand (78) eines Lenkgetriebegehäuses und unter Zwischenanordnung eines Lagers (72) mit dem drehfest mit dem Lenkrad verbundenen Bauteil verbunden ist.

## Claims

1. Device for activating an airbag system housed in a steering wheel, containing a gas generator (8) to inflate an airbag (6), a primer (14) to ignite the gas generator and an optical waveguide (18, 28; 54) connected to a light source (30) away from the steering wheel to supply a light pulse igniting the primer to the primer, **characterised in that** a connecting system is provided between the airbag (6) and the optical waveguide (18, 28, 54) arranged at least somewhat concentrically in respect of the axis of rotation (A-A) of the steering wheel (2), which disconnects the optical waveguide from rotation of the steering wheel and ensures the functional connection of the optical waveguide via the primer (14) to the gas generator (8) and the airbag.

2. Device according to Claim 1, **characterised in that** the optical waveguide has a final section (18) fixed to the steering wheel and ending at the primer (14) and a feed section (28) starting from the light source (30), disconnected from the steering wheel (2) in respect of the latter's rotatability, with a light outlet window (26) of the feed section and a light inlet window (24) of the end section arranged opposite each other in the same axis as the axis of rotation (A-A) of the steering wheel (2).

3. Device according to Claim 2, **characterised in that** the steering wheel end of the feed section (28) of the optical waveguide is housed in a bearing (34), which is attached to a steering column (38) connected in a non-rotatable fashion to the steering wheel (2).

4. Device according to Claim 1, **characterised in that** the gas generator (8) is connected in a non-rotatable fashion to the steering wheel (2) and can be rotated in relation to the primer (14) attached coaxially in respect of the axis of rotation (A-A) of the steering wheel (2) and disconnected in respect of the rotation of the steering wheel.

5. Device according to Claim 4, **characterised in that** the primer (14) is housed in a recess (10) of the gas generator (8) and a bearing (50) is located between the gas generator and the primer.

6. Device according to Claim 1, **characterised in that** the primer (14) is connected in a non-rotatable fashion to the steering wheel (2) and can be rotated in relation to the end of the optical waveguide (54) facing it.

7. Device according to Claim 6, **characterised in that** the optical waveguide (54) is housed in a connecting opening (62) of a housing (12) of the primer (14) with an intermediate bearing (60).

8. Device according to one of Claims 1 to 7, **characterised in that** a fluorescent film (22) is located between a light outlet window (66) of the optical waveguide (54) and the primer (14).

9. Device according to one of Claims 1 to 8, **characterised in that** the optical waveguide (54) is passed out from an exterior area through a transfer section (74) into the interior of a component (68) connected in a non-rotatable fashion to the steering wheel (2), with the bridge component connected rigidly to a wall (78) of a steering gear system and with an intermediate bearing (72) to the component connected in a non-rotatable fashion to the steering wheel.

## Revendications

1. Dispositif de déclenchement d'un dispositif de coussin gonflable installé dans un volant de direction, comportant un générateur de gaz (8) pour gonfler un coussin gonflable (6), une amorce d'allumage (14) pour allumer le générateur de gaz et un conducteur à fibres optiques (18, 28; 54) relié à une source de lumière (30) éloignée du volant, destiné à envoyer à l'amorce d'allumage une impulsion de lumière allumant l'amorce d'allumage,
**caractérisé en ce qu'**entre le coussin gonflable (6) et le conducteur à fibres optiques (18, 28, 54),est prévu un dispositif d'accouplement disposé de façon au moins sensiblement concentrique à l'axe de rotation (A-A) du volant (2), dispositif qui désaccouple le conducteur à fibres optiques par rapport à une rotation du volant (2) et qui assure une liaison fonctionnelle depuis le conducteur à fibres optiques, par l'amorce d'allumage (14), vers le générateur de gaz (8) et le coussin gonflable.

2. Dispositif suivant la revendication 1, **caractérisé en ce que** le conducteur à fibres optiques présente une pièce d'extrémité (18), solidaire du volant de direction et se terminant sur l'amorce d'allumage (14), et une pièce d'arrivée de la lumière (28), partant de la source de lumière (30) et désaccouplée du volant (2) en ce qui concerne sa possibilité de rotation, une fenêtre (26) de sortie de la lumière de la pièce d'arrivée de la lumière (28) et une fenêtre (24) d'entrée de la lumière de la pièce d'extrémité (18) étant disposées en face l'une de l'autre, avec le même axe que l'axe de rotation (A-A) du volant (2).

3. Dispositif suivant la revendication 2, **caractérisé en ce que** l'extrémité, située du côté du volant, de la pièce d'arrivée de la lumière (28) du conducteur à fibres optiques est prisé dans un palier (34), qui est installé sur une cotonne de direction (38), reliée de façon fixe en rotation au volant (2).

4. Dispositif suivant la revendication 1, **caractérisé en ce que** le générateur de gaz (8) est relié, fixe en rotation, au volant (2) et peut tourner par rapport à l'amorce d'allumage (14), montée coaxialement par rapport à l'axe de rotation (A-A) du volant (2), et découplée du volant en ce qui concerne la rotation.

5. Dispositif suivant la revendication 4, **caractérisé en ce que** l'amorce d'allumage (14) est installée dans une cavité (10) du générateur de gaz (8) et **en ce qu'**un palier (50) est disposé entre le générateur de gaz et l'amorce d'allumage.

6. Dispositif suivant la revendication 1, **caractérisé en ce que** l'amorce d'allumage (14) est reliée au volant (2) de façon fixe en rotation, et peut tourner par rapport à l'extrémité du conducteur à fibres optiques (54) tournée vers elle.

7. Dispositif suivant la revendication 6, **caractérisé en ce que** le conducteur à fibres optiques (54) est reçu dans une ouverture de passage (62) d'un boîtier (12) de l'amorce d'allumage (14), avec interposition d'un palier (60).

8. Dispositif suivant l'une des revendications 1 à 7, **caractérisé en ce qu'**entre une fenêtre de sortie de la lumière (66) du conducteur à fibres optiques (54) et l'amorce d'allumage (14), est disposé une feuille fluorescente (22).

9. Dispositif suivant l'une des revendications 1 à 8, **caractérisé en ce que** le conducteur à fibres optiques (54) est guidé, depuis un espace extérieur, en traversant une pièce formant pontage (74), dans l'intérieur d'un composant (68) relié au volant (2) de façon fixe en rotation, la pièce de pontage étant reliée de façon rigide à une paroi (78) d'un boîtier d'entraînement du volant et, avec interposition d'un palier (72), au composant relié lui-même au volant, de façon fixe en rotation.
